Europäisches Patentamt

European Patent Office

Office européen des brevets

(11) Numéro de publication : **0 381 554 B1**

# (12) FASCICULE DE BREVET EUROPEEN

(45) Date de publication du fascicule du brevet :
**18.03.92 Bulletin 92/12**

(51) Int. Cl.$^5$ : **B60R 25/02**

(21) Numéro de dépôt : **90400188.0**

(22) Date de dépôt : **23.01.90**

(54) **Gâche pour serrure de blocage en rotation d'un arbre et son application aux antivols de direction d'automobiles.**

(30) Priorité : **01.02.89 FR 8901294**

(43) Date de publication de la demande :
**08.08.90 Bulletin 90/32**

(45) Mention de la délivrance du brevet :
**18.03.92 Bulletin 92/12**

(84) Etats contractants désignés :
**BE DE ES GB IT NL SE**

(56) Documents cités :
**EP-A- 0 204 621**
**EP-A- 0 216 651**
**DE-A- 3 435 084**
**FR-A- 2 161 392**

(73) Titulaire : **NACAM**
**Route de Blois**
**F-41100 Vendome (FR)**

(72) Inventeur : **Haldric, Bernard**
**15, rue Charles Lindbergh**
**F-41100 Vendome (FR)**
Inventeur : **Benedi, Grégorio**
**6 bis, rue du 20ème Chasseur**
**F-41100 Vendome (FR)**
Inventeur : **Baudon, Sylvie, née Chardon**
**3, rue Edgar Degas, Naveil**
**F-41100 Vendome (FR)**
Inventeur : **Sevault, Bernard**
**Lotissement des Vignes, Meslay**
**F-41100 Vendome (FR)**

(74) Mandataire : **Phélip, Bruno et al**
**c/o Cabinet Harlé & Phélip 21, rue de La**
**Rochefoucauld**
**F-75009 Paris (FR)**

## Description

La présente invention concerne les serrures de blocage en rotation d'un arbre notamment du type de celles utilisées pour les antivols d'automobile placés sur la colonne de direction.

L'invention a plus particulièrement pour objets une gâche pour serrure de blocage en rotation d'un arbre pouvant tourner suivant son axe et son application aux antivols pour direction d'automobile.

Dans de nombreux secteurs techniques il est nécessaire de pouvoir assurer le blocage en rotation d'un arbre pouvant tourner suivant son axe à l'aide d'une serrure commandée par une clé de manière à pouvoir immobiliser ou laisser libre cet arbre, suivant les besoins.

Ce type d'usage est relativement fréquent notamment dans l'industrie automobile où une serrure antivol habituellement permet de bloquer la colonne de direction d'un véhicule lorsque ce dernier est abandonné par son conducteur. Pour une telle utilisation, le pêne de la serrure est commandé par une clé de manière à pouvoir se déplacer dans un coffre fixe approximativement perpendiculairement à l'axe d'un arbre de la colonne de direction pour s'engager ou se dégager d'un logement d'une gâche solidaire en rotation de l'arbre. Dans ce type de serrure antivol, il est relativement courant de faire une gâche qui se présente à la manière d'un fourreau tubulaire ou de deux demi-coquilles semi-cylindriques qui sont rapportés sur l'arbre et fixés à ce dernier de manière à en être solidaires en rotation. Cette fixation est couramment obtenue par soudage. Une telle gâche est munie à sa périphérie d'un logement en général approximativement parallèle aux génératrices de l'arbre dans lequel le pêne de la serrure commandé par la clé peut s'engager.

La fabrication de telles serrures et, en particulier de la gâche pose de nombreux problèmes du fait notamment que l'arbre de la colonne de direction à laquelle elle est destinée à être assujettie doit satisfaire à des prescriptions relativement normalisées. C'est en particulier le cas des diamètres intérieur et extérieur et donc de l'épaisseur de l'arbre creux ainsi que des nuances du matériau dans lequel cet arbre est fait. Dans de telles conditions la fixation d'une gâche sur un arbre creux relativement mince pose des problèmes techniques de fabrication et économiques de coûts.

L'invention a pour but de fabriquer une gâche pour serrure de blocage en rotation d'un arbre pouvant tourner suivant son axe, à l'aide d'un pêne mobile approximativement perpendiculairement à cet axe notamment en vue de son application aux antivols de direction d'automobiles qui ne présente pas des inconvénients du type de ceux que l'on a rappelés précédemment.

L'invention a pour objet une gâche pour serrure de blocage en rotation d'un arbre pouvant tourner suivant son axe à l'aide d'un pêne mobile dans un coffre fixe, approximativement perpendiculairement à cet axe où cette gâche est destinée à être montée à la périphérie de cet arbre. Cette gâche est caractérisée en ce qu'elle comprend des disques transpercés chacun d'un orifice central destiné à recevoir cet arbre pour les y empiler, en ce qu'elle est destinée à être rendue solidaire en rotation de cet arbre à l'aide d'un crabot constitué d'au moins un couple de saillie et d'échancrure dont l'une est ménagée dans cet orifice central et l'autre l'est à la périphérie de cet arbre, en ce qu'au moins une partie de ces disques sont pourvus sur leur tranche d'au moins une entaille et en ce que ces entailles sont destinées à être alignées longitudinalement de manière à former un logement destiné à recevoir le pêne.

L'invention a aussi pour objet l'application d'une telle gâche de serrure notamment à un antivol de direction d'automobile.

D'autres caractéristiques de l'invention ressortiront de la lecture de la description et des revendications qui suivent ainsi que de l'examen du dessin annexé, donné seulement à titre d'exemple, où :
– la Fig.1 est une vue perspective schématique d'un mode de réalisation d'une gâche pour serrure de blocage en rotation d'un arbre pouvant tourner suivant son axe selon l'invention ;
– la Fig.2 est une coupe méridienne du mode de réalisation de la Fig.1 par un plan passant par les entailles délimitant le logement du pêne ; et
– les Fig.3A, 3B et 3C sont des vues en coupe par un plan perpendiculaire à l'axe de l'arbre de différents modes de réalisation d'une gâche selon l'invention.

Les serrures de blocage en rotation d'un arbre pouvant tourner suivant son axe et en particulier leur gâche et, notamment, les serrures pour les antivols de direction d'automobile étant bien connues on ne décrira par la suite que ce qui se rapporte à l'invention. Pour le surplus le spécialiste de la technique considérée puisera dans les solutions classiques courantes à sa disposition pour faire face aux problèmes particuliers auxquels il est confronté.

Dans la suite un même numéro de référence désignera toujours un même élément homologue quel que soit le mode de réalisation.

Dans la description qui suit et sur les figures qui s'y rapportent on supposera que la gâche pour serrure de blocage en rotation d'un arbre pouvant tourner suivant son axe à l'aide d'un pêne mobile dans sun coffre fixe approximativement perpendiculairement à cet axe, concerne un antivol de direction d'automobile. Mais il est clair que la gâche pour serrure suivant l'invention peut s'appliquer à bien d'autres utilisations.

Comme on le voit sur les figures du dessin, un arbre 10, de préférence creux, d'axe 100 présente une périphérie 11 sur laquelle viendra s'assujettir une gâche 20 d'une serrure selon l'invention. Cette gâche 20 est destinée à être condamnée ou libérée par le pêne 12 d'une serrure qui comprend un coffre 13 fixe ; ce pêne est mobile dans ce coffre de manière à pouvoir se déplacer approximativement perpendiculairement à l'axe 100 de l'arbre, de préférence radialement. Ceci est relativement classique et on ne s'y étendra pas davantage. La manoeuvre du pêne est habituellement commandée à l'aide d'une clé 14. Clé, coffre et pêne sont dessinés schématiquement.

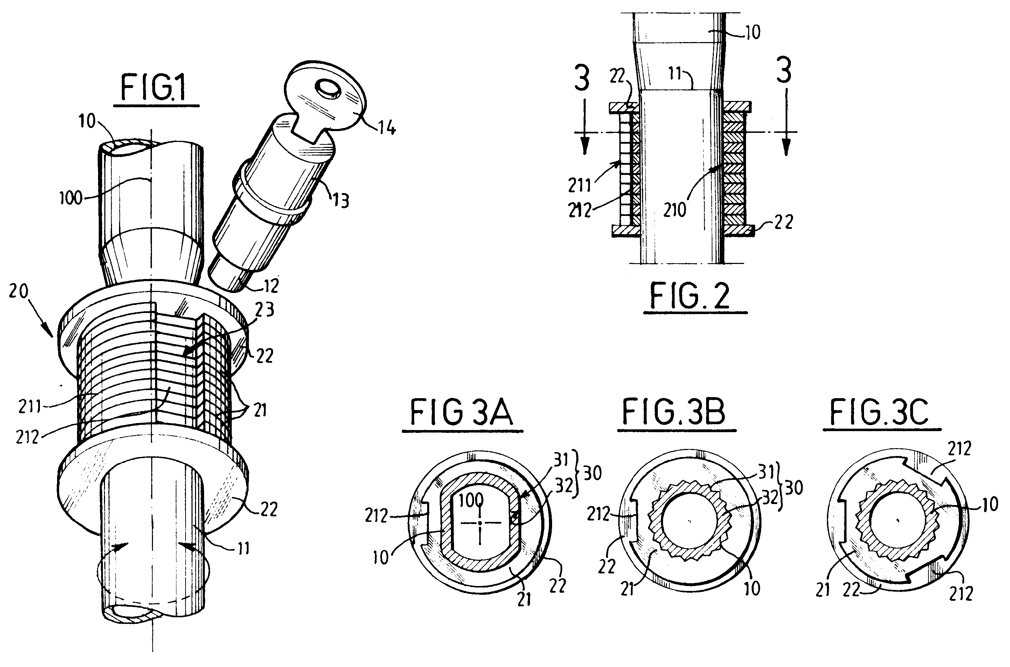

Comme on le voit clairement sur les figures du dessin, la gâche 20 est constituée de disques 21 ; chacun de ces disques est percé d'un orifice 210 central et porte sur sa tranche 211 une entaille 212. Ces disques sont destinés à être enfilés sur la périphérie 11 de l'arbre 10 et à y être empilés comme dessiné sur la Fig. 1.

Lorsque les disques 21 sont empilés sur l'arbre 10, leurs entailles 212 sont alignées les unes avec les autres de manière à délimiter un logement 23 dans lequel pourra venir s'engager le pêne 12 de la serrure pour interdire toute rotation de l'arbre suivant son axe ; cette rotation est schématisée par une flèche double sur la Fig. 1.

L'immobilisation en rotation de ces disques sur la périphérie de l'arbre est assurée à l'aide d'un crabot 30 constitué d'au moins un couple de saillie 31 et échancrure 32 dont l'une est ménagée dans cet orifice central 210 de chacun des disques 21 et l'autre l'est à la périphérie 11 de cet arbre 10.

Comme on le voit sur la coupe de la Fig.3A d'un mode de réalisation, le crabot 30 comprend une saillie 31 sur les disques et une échancrure 32 sur l'arbre, faites de méplats complémentaires, de préférence diamètralement opposés.

Dans le mode réalisation de la Fig.3B, ce crabot 30 est constitué de cannelures complémentaires faites les unes sur la périphérie 11 de l'arbre et les autres à l'intérieur de l'orifice 210 des disques.

Le mode de réalisation illustré sur la Fig.3C diffère de celui dessiné sur la Fig.3B simplement en ce que les entailles 212 sont multiples et de préférence équidistantes ; comme on peut le voir on a fait trois entailles équidistantes à 120° les unes des autres. Cette solution permet de bloquer la colonne de direction sans avoir à la replacer systématiquement dans une position bien déterminée ; ceci facilite l'usage de l'antivol comme il est bien connu.

Selon une autre variante non dessinée, le crabot est constitué par une clavette engagée dans des alvéoles correspondants de l'arbre et des disques, par exemple du type de celui connu dans le commerce sous la désignation "Nadello K"

Si l'on se reporte à la Fig. 1, on y voit que l'un au moins des disques qui est situé aux extrémités de la pile présente un diamètre extérieur plus grand que le diamètre des autres disques sous-jacents. Dans ce mode de réalisation les deux disques 22 situés aux extrémités de la pile ont des diamètres supérieurs à ceux des autres disques mais il est clair que l'un seulement de ces disques peut être d'un diamètre plus grand. Ces disques d'extrémités sont, de préférence, dépourvus d'entaille.

On exposera maintenant la raison pour laquelle l'un au moins de ces deux disques d'extrémité est d'un diamètre plus grand. Comme il est classique, lorsqu'elle est prête à être utilisée, une colonne de direction comprend un arbre qui est engagé dans une gaine tubulaire dans laquelle il repose par ses extrémités à l'aide de paliers, habituellement des roulements à billes. Lorsqu' une telle colonne de direction est immobilisée en rotation par l'engagement du pêne dans le logement de la gâche assujettie à l'arbre et qu'on la soumet à des essais normalisés, le couple de torsion qu'on lui fait subir, génère une composante radiale dans les paliers du fait de la rencontre du pêne avec le logement de la gâche et de l'arcboutement qui en résulte. Cette composante radiale tend à faire fléchir l'arbre au niveau du pêne et cette inflexion tend à provoquer un dégagement, une séparation de la gâche du pêne. Pour éviter ceci, le ou les disques d'extrémité sont d'un diamètre supérieur choisi de manière à ce que ceux-ci normalement ne prennent pas appui sur la paroi intérieure de la gaine cylindrique dans laquelle est engagé l'arbre mais se trouvent au voisinage immédiat de celle-ci. On comprend alors que lors des essais, quand l'arbre tend à fléchir, la tranche des disques du diamètre le plus grand vient prendre appui sur la paroi intérieure de la gaine proche et ainsi assurer une réaction à la composante radiale.

La pile des disques de la gâche est immobilisée axialement sur l'arbre de toute manière appropriée par exemple par blocage, coincement, soudage des disques d'extrémité.

De préférence, les disques de la gâche pour serrure selon l'invention sont fabriqués par découpe et emboutissage d'une tôle appropriée de manière à être obtenus directement prêts à être utilisés et montés.

La mise en forme de l'arbre pour y ménager la partie du crabot qu'il doit porter est classique ; on utilise par exemple le roulage ou le matriçage.

On comprend donc tout l'intérêt de l'invention puisque la gâche ainsi obtenue résulte directement d'une opération de travail classique et relativement aisée de la tôle et qu'elle ne nécessite aucune opération complémentaire autre que la fixation axiale.

**Revendications**

1. Gâche (20) pour serrure de blocage en rotation d'un arbre (10) pouvant tourner suivant son axe (100) à l'aide d'un pêne mobile (12) dans un coffre (13) fixe approximativement perpendiculairement à cet axe (100) où cette gâche (20) est destinée à être montée à la périphérie de cet arbre (10), caractérisée en ce qu'elle comprend des disques (21) transpercés chacun d'un orifice central (210) destiné à recevoir cet arbre (10) pour les y empiler, en ce qu'elle est destinée à être rendue solidaire en rotation de cet arbre (10) à l'aide d'un crabot (30) constitué d'au moins un couple de saillie (31) et d'échancrure (32) dont l'une est ménagée dans cet orifice central (210) et l'autre l'est à la périphérie (11) de cet arbre (10), en ce qu'au moins une partie de ces disques (21) sont pourvus sur leur tranche (211) d'au moins une entaille (212) et en ce que ces entailles (212) sont destinées à être alignées longitudinalement de manière à former un logement (23) pour recevoir le pêne (12).

2. Gâche (20) selon la revendication 1, caractérisée en ce que le crabot (30) constitué d'au moins un couple de saillie (31) et échancrure (32) est fait de cannelures réparties autour de cet orifice (210) et de la périphérie (11) de cet arbre (10).

3. Gâche (20) selon la revendication 1, caractérisée en ce que crabot (30) constitué d'au moins un couple de saillie (31) et échancrure (32) est fait de méplats diamétralement opposés pratiqués sur cet orifice (210) et sur la périphérie (11) de cet arbre (10).

4. Gâche (20) selon la revendication 1, caractérisée en ce que ce crabot (30) constitué d'au moins un couple de saillie (31) et d'échancrure (32) est fait d'une clavette engagée dans des alvéoles correspondants pratiqués autour de cet orifice (210) et à la périphérie (11) de cet arbre (10).

5. Gâche (20) selon l'une quelconque des revendications 1 à 4, caractérisée en ce que les disques (21) portent trois entailles (212) équidistantes.

6. Gâche (20) selon l'une quelconque des revendications 1 à 5, caractérisée en ce qu'au moins l'un (22) des disques (21) situé à l'extrémité de la pile présente un diamètre extérieur supérieur au diamètre extérieur des autres disques (21) sous-jacents.

7. Gâche (20) selon la revendication 6, caractérisée en ce que le disque d'extrémité (22) de plus grand diamètre extérieur est démuni d'entaille.

8. Gâche (20) selon l'une quelconque des revendications 1 à 7, caractérisée en ce que les disques (21) sont obtenus par découpes et emboutissage directs d'une tôle.

9. Application de la gâche de serrure (20) selon l'une quelconque des revendications 1 à 8 aux serrures antivols pour colonne de direction d'automobile.


**Patentansprüche**

1. Schließbuchse (20) für ein Rotationsblockierschloß einer Welle (10), welche sich entlang ihrer Achse (100) mit Hilfe eines beweglichen Riegels (12) in einem festen Gehäuse (13) drehen kann, welches ungefähr senkrecht zu dieser Achse (100) ist, wobei diese Schließbuchse (20) dafür bestimmt ist, an der Peripherie dieser Welle (10) befestigt zu sein, dadurch gekennzeichnet, daß sie Scheiben (21) aufweist, welche jeweils von einer zentralen Öffnung (210) zur Aufnahme dieser Welle (10) durchbohrt sind, um die Scheiben an ihr aufzustapeln, daß sie dazu bestimmt ist, mit der Rotation dieser Welle (10) mit Hilfe einer Kuppelmuffe (30) einstückig gemacht zu werden, welche zumindest aus einem Paar Ausladungen (31) und einem Paar bogenförmiger Ausschnitte (32) besteht, von denen eine in dieser Zentralöffnung (210) eingearbeitet ist und die andere an der Peripherie (11) dieser Welle (10) ist, daß zumindest ein Teil dieser Scheiben (21) auf ihrer Schnittfläche (211) mit zumindest einer Kerbe (212) versehen sind und daß diese Kerben (212) dazu bestimmt sind, um longitudinal ausgerichtet zu werden, so daß sie eine Lagerung (23) zur Aufnahme des Riegels (12) bilden.

2. Schließbuchse (20) nach Anspruch 1, dadurch gekennnzeichnet, daß die zumindest aus einem Paar von Ausldungen (31) und Ausschnitten (32) bestehende Kuppelmuffe (30), aus Riffelungen gemacht ist, welche um die Öffnung (210) und die Peripherie (11) dieser Welle (10) verteilt sind.

3. Schließbuchse (20) nach Anspruch 1, dadurch gekennzeichnet, daß die aus zumindest einem Paar von Ausladungen (31) und Ausschnitten (32) bestehende Kuppelmuffe (30) aus Abflachungen gefertigt ist, welche sich diametral gegenüberstehen und an der Öffnung (210) und an der Peripherie (11) der Welle (10) gefertigt sind.

4. Schließbuchse (20) Anspruch 1, dadurch gekennzeichnet, daß die aus zumindest einem Paar von Ausladungen (31) und Ausschnitten (32) bestebende Kuppelmuffe (30) aus einem Befestigungskeil gefertigt ist, welcher mit den entsprechenden Zellen in Eingriff ist, welche um die Öffnung (210) und an der Peripherie (11) der Welle (10) gefertigt sind.

5. Schließbuchse (20) nach einem der Ansprüche 1 bis 4, dadurch gekennzeichnet, daß die Scheiben (21) drei äquidistante Kerben (212) aufweisen.

6. Schließbuchse (20) nach einem der Ansprüche 1 bis 5, dadurch gekennzeichnet, daß zumindest eine Scheibe (22) der an dem Ende des Stapels gelegenen Scheiben (21) einen Außendurchmesser hat, welcher größer ist als der Außendurchmesser der anderen darunterliegenden Scheiben (21).

7. Schließbuchse (20) nach Anspruch 6, dadurch gekennzeichnet, daß die Endscheibe (22) mit dem größeren Außendurchmesser keine Kerbe aufweist.

8. Schließbuchse (20) nach einem der Ansprüche 1 bis 7, dadurch gekennzeichnet, daß die Scheiben (21) durch direktes Schneiden und Pressen eines Blechs erhalten werden.

9. Verwendung der Schließbuchse (20) eines Schlosses nach einem der Ansprüche 1 bis 8 für Diebstahlsicherungschlösser für die Lenksäule eines Automobils.

**Claims**

1. Keeper (20) for a lock for the rotational blocking of a shaft (10) rotatable according to its axis (100) by means of a bolt moveable (12) in a fixed case (13) approximately perpendicular relative to this axis (100), this keeper being intended to be mounted on the periphery of this shaft (10), characterized in that it comprises discs (21), each pierced through with a central orifice (210) intended for receiving this shaft (10) in order to stack them on it, in that it is intended to be made integral in terms of rotation with this shaft (10) by means of an interlock (30) consisting of at least one pair of projection (31) and notch (32), of which one is formed in this central orifice (210) and the other is formed on the periphery (11) of this shaft (10), in that at least some of these discs (21) are equipped at their edge (211) with at least one indentation (212), and in that these indentations (212) are intended to be aligned longitudinally so as to produce a receptacle (23) for receiving the bolt (12).

2. Keeper (20) according to Claim 1, characterized in that the interlock (30) consisting of at least one pair of projection (31) and notch (32) is formed by splines distributed about this orifice (210) and about the periphery (11) of this shaft (10).

3. Keeper (20) according to Claim 1, characterized in that the interlock (30) consisting of at least one pair of projection (31) and notch (32) is formed by flats which are diametrically opposite one another and which are made on this orifice (210) and on the periphery (11) of this shaft (10).

4. Keeper (20) according to Claim 1, characterized in that this interlock (30) consisting of at least one pair of projection (31) and notch (32) is formed by a key engaged in corresponding cells made about this orifice (210) and on the periphery (11) of this shaft (10).

5. Keeper (20) according to any one of Claims 1 to 4, characterized in that the discs (21) carry three indentations (212) equidistant from one another.

6. Keeper (20) according to any one of Claims 1 to 5, characterized in that at least one (22) of the discs (21) located at the end of the stack has an outside diameter larger than the outside diameter of the other underlying discs (21).

7. Keeper (20) according to Claim 6, characterized in that the end disc (22) of larger outside diameter is free of identation.

8. Keeper (20) according to any one of Claims 1 to 7, characterized in that the discs ( 21 ) are obtained by the direct cutting out and stamping of a metal sheet.

9. Use of the lock keeper (20) according to any one of Claims 1 to 8 on anti-theft locks for a motor-vehicle steering column.

FIG.3C

FIG.3B

FIG3A

FIG.2

FIG1